# EUROPEAN PATENT APPLICATION

(11) **EP 4 481 191 A1**
(43) Date of publication of application: **25.12.2024**
(21) Application number: 23180207.5
(22) Date of filing: 20.06.2023
(51) Int. Cl.: F03D 9/19, C25B 1/04, F03D 13/20, F03D 13/25

(54) **WIND TURBINE WITH DOUBLE DECK PLATFORM**

(71) Applicant: Siemens Gamesa Renewable Energy A/S, 7330 Brande (DK)
(72) Inventor: Soylu, Mahmut Erbil, 4700 Naestved (DK)
(74) Representative: SGRE-Association

(57) **Abstract**

Wind turbine (1), in particular an offshore hydrogen production wind turbine, comprising: a wind turbine tower (2); an upper deck (4) arranged at the wind turbine tower (2) at a first vertical position; and a lower deck (5) arranged at the wind turbine tower (2)at a second vertical position. The first vertical position is different from the second vertical position.

## Description

### Field of invention

The present invention relates in general to wind turbines needing a platform structure for lodging equipment or apparatus being necessary to operate the wind turbine or being used or operated in conjunction with the wind turbine. In particular, the invention relates to an offshore wind turbine used for producing hydrogen, a so-called offshore hydrogen production wind turbine. Further, the present invention relates to a method for producing hydrogen by using a wind turbine with such platform structure. Further, the present invention relates to a method for assembling a wind turbine having a double level or doble deck platform.

### Art Background

Wind turbines require a variety of equipment or apparatus in order to properly operate the wind turbine self, such as, for example, backup electric power storages, rectifiers, transformers and the like. Such equipment or apparatus might require such amount of space, that it might not be placed within the wind turbine tower. In such a case, a platform might be arranged at the wind turbine tower for providing a space to place the equipment or the apparatus.

This is in particular the case for offshore wind turbines, which also comprise offshore hydrogen production wind turbines.

Offshore hydrogen production wind turbines represent an efficient response to the increasing need for the decarbonization of the energy supply industry caused by the threatening climate change: fossil fuels have to be replaced with green fuels. Offshore hydrogen production wind turbines are wind turbines using wind energy to perform electrolysis on seawater and produce hydrogen.

Such offshore hydrogen production wind turbines might be either connected to an electrical grid (on-grid), in which case the electrolysis in performed in time slots where there is a surplus of electric energy in the electric grid. Alternatively, offshore hydrogen production wind turbines are disconnected from the grid and have the sole purpose of using wind energy to produce hydrogen via the electrolysis (off-grid).

In both cases, such offshore hydrogen production wind turbines require equipment needed for producing, storing and delivering the produced hydrogen, such as, for example, electrolyzer units, gas processing equipment, drying and conditioning unit and gas outlet terminals. On top of that, they also require safety system, such as a nitrogen generation system needed for neutralizing the hydrogen within the system upon leakages or maintenance.

Often, the above equipment is, along with the further equipment needed for operating the wind turbine, be commonly placed on a platform having a single level or deck arranged at the wind turbine tower. Such platform architecture with one level or deck has limitations in size due the possible monopile foundations of the wind turbine and approach of jackup lifting barges along the wind turbine for servicing the wind turbine itself.

Another drawback is also the increased structural requirement of the supporting structure for fixing or connecting the platform to the wind turbine tower.

### Summary of the invention

There may be a need for providing an alternative solution for arranging equipment needed for operating the wind turbine and/or for producing and delivering produced hydrogen. Also, there might be the need for exploring a new architecture having a reduced footprint and increased stiffness.

According to a first aspect of the present invention, a wind turbine, in particular an offshore hydrogen production wind turbine, is provided. The wind turbine comprises a wind turbine tower; an upper deck arranged at the wind turbine tower at a first vertical position; and a lower deck arranged at the wind turbine tower at a second vertical position, wherein the first vertical position is different from the second vertical position.

According to a second aspect of the present invention, a method for producing hydrogen using an offshore hydrogen production wind turbine is provided.

According to a third aspect of the present invention, a method for assembling a wind turbine is provided. The method comprises a step of providing an upper deck and a lower deck; a step of arranging the upper deck at a wind turbine tower of a wind turbine at a first vertical position and arranging the lower deck at the wind turbine tower at a second vertical position, wherein the first vertical position is different from the second vertical position.

According to the present invention, a deck is a planar element connected, directly or indirectly, to the wind turbine tower and at which equipment for running the wind turbine or for producing hydrogen can be placed or arranged.

According to the present invention it is therefore provided that two separate decks, the upper deck and the lower deck, are arranged at the wind turbine tower at different heights of the vertical axis of the wind turbine tower. Therefore, it might be possible to reduce the footprint of each of the decks, so that the decks and the structures supporting them are not subjected to the high stresses present by using a single deck platform.

Also, another advantage of the present invention is provided by the fact that the stiffness of the wind turbine, and in particular of the decks, is increased by the reduced footprint of the decks. Also, a further advantage is provided by an easier handling of the loads being arranged at the upper deck or at the lower deck.

Also, another advantage is provided by the modularity of the system, which allows the assembling of the lower deck and the upper deck directly at the site of the wind turbine, thus avoiding the need for assembling and transporting the single level or deck structure with all its equipment at a manufacturing site, as known from the prior art.

For example, it may be provided that at least one of the decks has a dimension or footprint of ca. 20 m x 20 m or less. Thereby, the respective deck is associated with comparatively short lever arms for (heavy weight) equipment being supported by the respective deck. Such structural advantage becomes evident in particular when considering offshore hydrogen production wind turbines, where weights of more than 30 t are arranged at one of the decks: by halving the maximum lever arm the maximum moment exercised by each piece of equipment is halved, thus effectively halving the bending stress at a root of the deck being connected with the wind turbine tower or at a support structure of the deck. This also reflects on the structural properties required by a crane installed on either of the decks of the platform.

On top of that, the smaller dimensions of each deck allow an easier handling of the decks themselves as well as an easier assembly process on the site of the wind turbine.

It is mentioned that the invention described in this document is not limited to two decks. The described wind turbine may also comprise at least one further deck, which is arranged above the upper deck, below the lower deck or in between the upper deck and the lower deck.

According to an embodiment, the wind turbine further comprises a support structure arranged between the upper deck and the lower deck, wherein the support structure is laterally arranged with respect to the wind turbine tower. Such support structure is advantageous for providing more structural stability of the upper and the lower decks connected to each other.

According to an embodiment, the support structure comprises a wall forming at least part of an enclosure between the upper deck and the lower deck. According to such embodiment it is therefore possible to form a space protected from the outer environment between the upper deck and the lower deck. In such an embodiment, the upper deck, the lower deck and the support structure comprising the wall form a double deck platform.

It might be possible that the wall extends on the entirety of a perimeter of the upper deck and/or of the lower deck. In such a case, the upper deck, the lower deck and the wall form a closed space, or enclosure, between the upper deck and the lower deck being completely protected from the outer environment. Thereby, the enclosure may (completely) surround the tower of the wind turbine.

In such a case it might be possible to arrange at the lower deck such equipment which needs to be in a controlled environment, such as, for example, electrolyzer units, gas processing equipment, drying and/or conditioning equipment. Other equipment, which is not so sensitive with regard to rough environmental conditions may be placed on top of the upper deck.

It might however also be the case that the support structure comprises a net formed by intersecting bars connected to the upper deck and to the lower deck.

In some embodiments the wind turbine further comprises a platform support structure connected to the wind turbine tower and to the upper deck and/or to the lower deck and configured for supporting the upper deck and/or the lower deck. In such a case, the upper deck and/or the lower deck are directly connected to and supported by the wind turbine tower.

According to an embodiment at least one of the wall, the upper deck and the lower deck are made of or comprise thermally insulating material. Within the meaning of the present disclosure, thermally insulating material is a material having an absolute thermal resistance value bigger than 1 m²K/W. A thermally insulating material might be, for example, a vacuum insulated panel, a polyurethane (PU) panel, a polystyrene panel or a polyisocyanurate panel.

If at least one of the wall, the upper deck and the lower deck is made of or comprises thermally insulating material, the enclosure might be thermally insulated from the outer environment, thus making it easier to have (thermally) controlled conditions within the enclosure. Such controlled conditions may be particularly advantageous when sensitive equipment, such as electrolyzer units, are placed within a corresponding thermally insulated enclosure.

It is possible that all of the wall, the upper deck and the lower deck are made of or comprise thermally insulating material.

According to an embodiment, the wind turbine further comprises a dehumidification device configured for controlling a moisture level within the enclosure. Thereby, it might be possible to create a controlled environment within the enclosure in respect to the humidity present within the enclosure. This may by of advantage in particular if equipment is placed within the enclosure which equipment is sensitive to humidity.

According to an embodiment, the wind turbine further comprises a temperature controlling system for controlling the temperature within the enclosure. Thereby, a proper temperature can be ensured within the enclosure such that in particular temperature sensitive equipment can be operated in a stable and long lasting manner.

It might also be the case that the wind turbine comprises a HVAC (heating, ventilation and air conditioning) device for controlling the environmental condition within the enclosures. Thereby, it may be possible to control different environmental conditions such as in particular the temperature, the pressure and the humidity with one single device.

According to an embodiment, the wind turbine further comprises a crane arranged at the upper deck or the lower deck in a space between the upper deck and the lower deck. Such crane might be fixed to the upper deck or to the lower deck and might be used for lifting, moving and/or placing equipment at the upper deck or the lower deck. Thus, a movement of pieces of equipment is facilitated and it may be possible to achieve a modular design of the upper deck and/or of the lower deck.

In an embodiment, the crane is arranged at the upper deck and might therefore be used as an overhead crane, thus facilitating the movement, the lifting and the placement of equipment at the lower deck without the need for anchoring the crane at the lower deck.

According to an embodiment, the wind turbine further comprises a backup electrical power storage which is arranged at the upper deck and/or the lower deck. The backup electrical power storage might be provided for supplying power to the wind turbine and/or to the other units present on the site of the wind turbine, such as, for example, an electrolyzer unit, when the wind conditions do not allow a correct operation of the wind turbine or when the wind turbine enters in an idle/maintenance mode. In such cases, the backup electrical power storage provides power for carrying out safety operations for safely stopping the wind turbine, such as, for example, turning a nacelle of the wind turbine in the wind. Alternatively or in combination, the backup electrical power storage may provide power for further generating hydrogen by running one or more electrolyzer units arranged at the wind turbine.

According to an embodiment, the wind turbine further comprises at least one electrolyzer unit which is arranged at the upper deck and/or the lower deck. Therefore, it is possible to have a hydrogen production wind turbine using the energy provided by the wind to generate hydrogen, wherein the equipment for electrolyzing is attached to the tower in a stable and reliable manner. In such case, green hydrogen, that is hydrogen generated only by means of renewable resources, can be provided by minimizing the carbon footprint of the generation process.

According to an embodiment, the at least one electrolyzer unit is arranged at the lower deck. Thereby, the electrolyzer unit might be better protected from the external environment.

In a particular embodiment, it is possible that the wind turbine comprises a support structure arranged between the upper deck and the lower deck, wherein the support structure is laterally arranged with respect to the wind turbine tower. Thereby, the support structure is wall along the whole perimeter of the upper deck and of the lower deck and wherein the wall, the upper deck and the lower deck are made of or comprise thermally insulating material. In such a case, it is possible to arrange the at least one electrolyzer unit within the enclosure, which is particularly well shielded from the outer environment, so that the electrolyzer units do not need to be placed within containers shielding them form the outer environment. This reduces the weight loaded on the lower deck, thus reducing the mechanical stresses caused on the structure supporting the lower deck. Another key advantage of such solution may be the improved accessibility to the electrolyzer units, thus reducing the maintenance and/or servicing effort. If the environmental conditions (temperature, humidity and/or pressure) within enclosure are controlled by, for example, a HVAC or a similar system, the also the operation of the electrolyzer units is simplified.

According to an embodiment, the wind turbine further comprises gas processing equipment and/or a gas drying and conditioning unit connected to the electrolyzer unit. The gas processing equipment may comprise filtering units for filtering the gas, dehumidification unit for removing moisture from the gas, purification units for removing minor components from the gas. Thereby, it may be possible to (i) further process the gas, and /or (ii) prepare the gas for transportation through a pipeline connected to the respective deck of the platform of the wind turbine.

According to a further embodiment, the wind turbine comprises a gas outlet terminal configured to be connected to a pipeline for transporting the hydrogen produced by the (offshore) hydrogen wind turbine. The gas outlet terminal might be a tubing, a pipe, a flange, a valve or a manifold system, which is connected directly to an outlet of the electrolyzer unit or to an outlet of a gas processing equipment and/or a gas drying and conditioning unit. Thus it may be possible to deliver the generated hydrogen to an external pipeline for transportation purposes.

According to a further embodiment, the at least one electrolyzer unit produces at least 30 m³ of hydrogen per hour.

According to an embodiment, the method for assembling the wind turbine further comprises providing a support structure; arranging the support structure between the upper deck and the lower deck; wherein it is preferably provided that the support structure comprises a wall, in particular a wall made of or comprising thermally insulating material, forming at least part of an enclosure between the upper deck, the lower deck and the wall.

Therefore, it is possible to form a double deck platform structure in a modular way directly at the location of the wind turbine, without the need for assembling the platform at the production site of the wind turbine.

According to a further embodiment, the method further comprises: providing a crane; arranging the crane at the upper deck within the enclosure; wherein the crane is configured for lifting, moving an d/or placing equipment at the lower deck. Therefore, it is possible to provide for an easy and fast way for placing equipment at the lower deck.

Within the context of the present invention, features which apply to the apparatus according to the first aspect of the present invention are appliable to the method according to the third aspect of the present invention and vice versa.

### Brief Description of the Drawings

- Figure 1: shows a part of a wind turbine according to an embodiment of the present invention.
- Figure 2: shows a sectional view of the wind turbine tower along the vertical axis at a position of the lower deck.
- Figure 3: shows a support structure.
- Figure 4: shows a structure of the lower deck.
- Figure 5: shows a possible configuration for the upper deck.
- Figure 6: shows a possible configuration for the lower deck.
- Figure 7: shows an embodiment of an assembling method according to the third aspect of the present invention.

### Detailed Description of the Drawings

The illustration in the drawing is schematic. It is noted that in different figures, similar or identical elements or features are provided with the same reference signs. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting as an apparatus according to an embodiment of the invention can assume orientations different than those illustrated in the figures when in use.

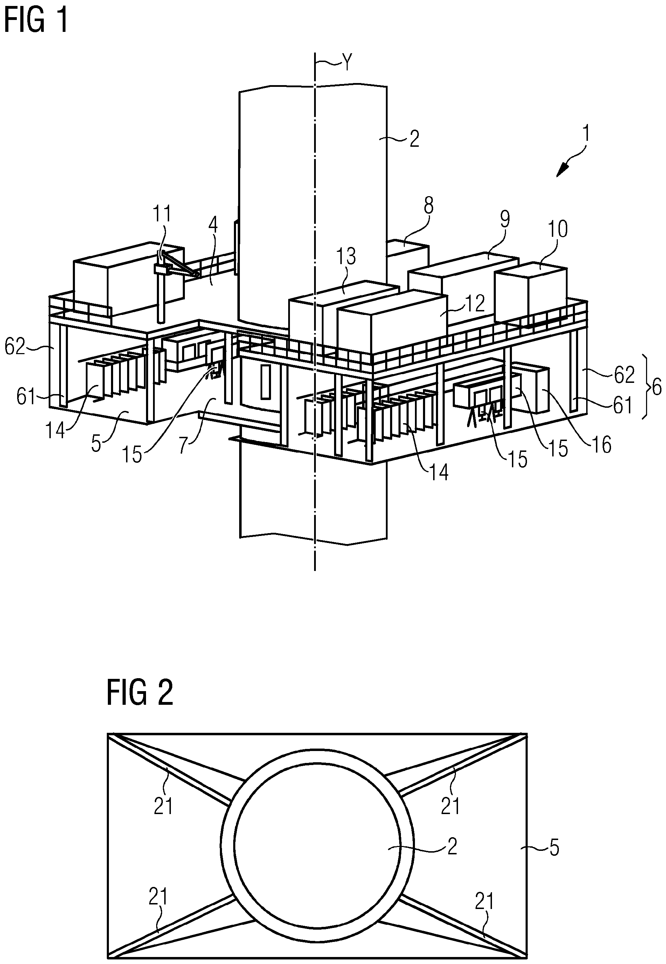

**Figure 1** shows a part of a wind turbine 1 according to an embodiment of the present invention. The wind turbine 1 is in particular an offshore hydrogen production wind turbine, which uses wind power for running electrolyzer units used for generating green hydrogen.

The wind turbine 1 comprises a wind turbine tower 2. The wind turbine tower 2 is fixed to a not depicted foundation, which is, in its turn, fixed to the sea ground (also not shown).

The wind turbine 1 further comprises an upper deck 4 and a lower deck 5. The upper deck 4 is arranged at the wind turbine tower 2 at a first vertical position and the lower deck 5 is arranged at the wind turbine tower 2 at a second vertical position, wherein the first vertical position is above the second vertical position along a vertical axis Y of the wind turbine tower 2. In other words, the lower deck 5 is placed nearer to the foundation of the wind turbine 1 as the upper deck 4.

The wind turbine 1 according to **Figure 1** further comprises a support structure 6 formed by pillars 61 and walls 62. The pillars 61 and the walls 62 are arranged between the upper deck 4 and the lower deck 5 in a lateral position with respect to the wind turbine tower 2. Although in **Figure 1** only two walls 62 are shown, the walls 62 might be running along all four sides of the perimeter of the upper deck 4 and of the lower decks, so as to form, together with the upper deck 4 and the lower deck 5 an enclosure 7, which is shielded at all sides from the external environment.

Therefore, in the embodiment according to **Figure 1****,** the lower deck 5, the upper deck 4 and the support structure 6 form a double deck platform within the meaning of the present invention.

In addition to that, at least one of the upper deck 4, the lower deck 5 and one of the walls 62 comprises or is made of thermally insulating material, such as vacuum panels, polyurethane panels, polystyrene panels or polyisocyanurate panels, so that the enclosure 7 is thermally insulated with respect to the outer environment.

At the upper deck 4 there are arranged respectively placed different pieces of equipment.

A first piece of equipment arranged at the upper deck 4 is a dehumidification device 8 configured for dehumidifying the enclosure 7. Furthermore, a HVAC system 9 is also placed at the upper deck 4 and is configured for providing an environmental control over the temperature, the pressure and the moisture level within the enclosure 7.

A backup electric power storage 10 is also arranged at the upper deck 4. The backup electric power storage 10 is configured for providing power to the wind turbine 1 when the wind conditions do not allow a proper functioning of the wind turbine 1 or when the wind turbine 1 needs to be put into a safe mode for maintenance or servicing reasons.

Also, the backup electric power storage 10 is configured for providing energy for the electrolytic process used for generating hydrogen, if no wind power is present. The backup electric power storage 10 might be charged by the wind turbine 1 during its operation.

A crane 11 is also arranged at the upper deck 4. The crane 11 is used for moving, lifting and placing the equipment at the upper deck 4.

An overhead crane (not shown) may be arranged at a lower surface of the upper deck 4 within the enclosure 7. Such an overhead crane may be configured for moving, lifting and placing the equipment at the lower deck 5.

Furthermore, a desalination unit 12 and a demineralization unit 13 are also arranged at the upper deck 4. These units 12 and 13 are configured for removing the salt and the minerals from the seawater and in order to provide a demineralized and desalinated seawater to the hydrogen generation units.

At the lower deck 5 there are arranged the pieces of equipment used for generating hydrogen.

Such equipment comprises electrolyzer units 14, gas processing equipment and gas drying and conditioning units 15 connected to the electrolyzer units 14.

The electrolyzer units 14 carry out the electrolytic process for generating hydrogen from the demineralized and desalinated seawater provided. The generated hydrogen is further processed, dried and conditioned in the gas processing equipment and in the gas drying and conditioning units 15. In such a way, the generated hydrogen is prepared for being transported.

In the embodiment shown in **Figure 1****,** a gas outlet terminal 16 is also arranged at the lower deck 5. The gas outlet terminal 16 is configured for being connected to a not depicted pipeline for transporting the generated hydrogen. The gas outlet terminal 16 might comprise a flange, a piece of tubing, a pipe and the like. The gas outlet terminal 16 can control the flow of the hydrogen by means of a valve (not shown).

In **Figure 1** the equipment arranged at the upper deck 4 is located within containers in order to be protected from the outer environment. However, the equipment arranged at the lower deck 5 within the enclosure 7 does not need to be arranged within containers, as it is insulated from the walls 62, the upper deck 4 and the lower deck 5 from the outer environment. Therefore, the overall weight of whole hydrogen generating equipment may be reduced. As a consequence, also the mechanical stresses exercised on the wind turbine tower 2 as well as on the support structures of the lower deck 5 compared to a configuration having only one single deck or level for placing all of the equipment may be reduced.

Furthermore, the arrangement shown in **Figure 1** is advantageous as it provides a controlled environment for the hydrogen generating equipment, thus making the operation and the servicing/maintenance of the hydrogen generating equipment easier.

**Figure 2** shows a sectional view of the wind turbine tower 2 along the vertical axis Y at a position of the lower deck 5. The wind turbine 1 comprises structural elements 21 connected on the one side to the wind turbine tower 2 and on the other side to the lower deck 5. The structural elements 21 are configured for supporting the lower deck 5 against the tower 2.

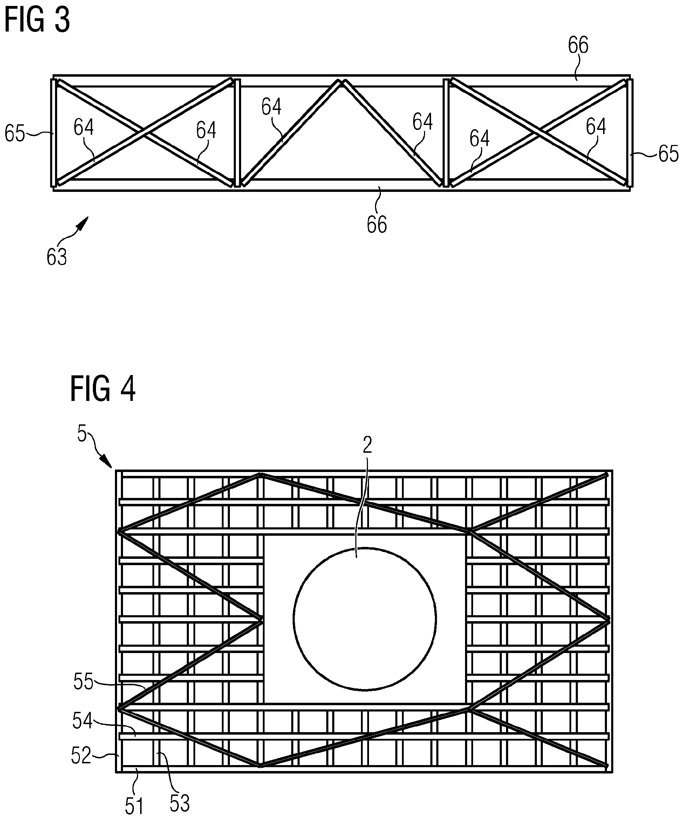

**Figure 3** shows a support structure 63, which might be used for forming the walls 62. The support structure 63 comprises diagonal struts 64, vertical bars 65 and horizontal bars 66. On the support structure 63 a panel made of or comprising thermally insulating material might be placed in order to form the wall 62.

**Figure** 4 shows a structure of the lower deck 5. The structure comprises perimetral horizontal bars 51 and perimetral vertical bars 52 defining a perimeter of the lower deck 5, around which the walls 62 might be placed.

A mesh of vertical bars 53 and horizontal bars 54 is placed within the perimeter of the lower deck 5 for structural purposes.

Struts 55 are provided for reinforcing the mesh.

At such structures panels made of or comprising thermally insulating material might be arranged, in order to form the lower deck 5 being thermally insulating, so that the enclosure 7 might be thermally insulated with respect to the outer environment.

The structure described in **Figure 4** might also be used for providing a structure of the upper deck 4.

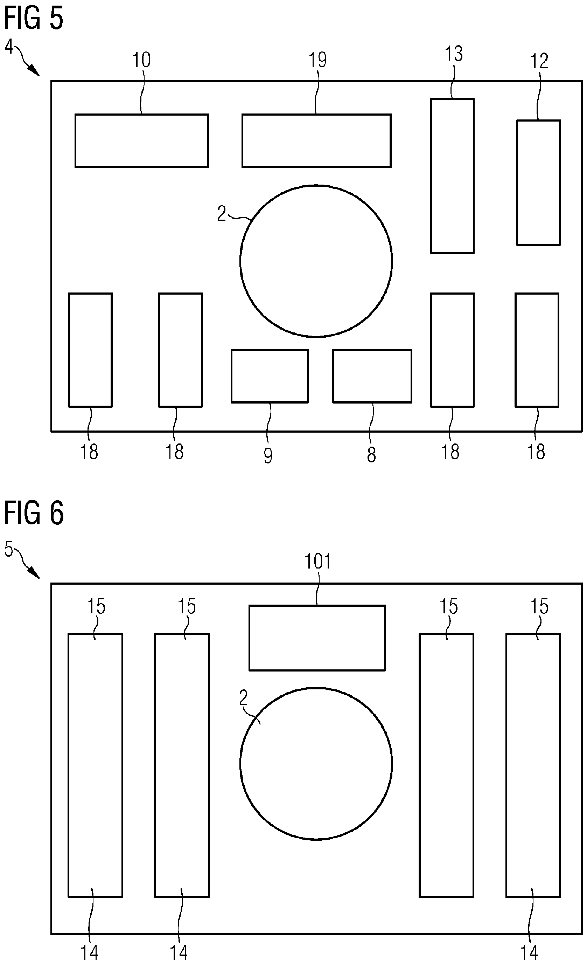

**Figure 5** shows a possible configuration of the upper deck 4. In contrast to the embodiment shown in **Figure 1****,** the configuration shown in **Figure 5** also comprises electrical rectifiers 18 configured for rectifying the electrical power generated by the wind turbine 1 in order to use it for the generation of hydrogen. The upper deck according to **Figure 5** also comprises a turbine service deck area 19, in which a control room for the wind turbine is placed.

**Figure 6** shows a possible configuration of the lower deck 5. In contrast to the embodiment shown in **Figure 1****,** the configuration according to **Figure 6** also comprises a control room 101 hosting the controlling equipment for the hydrogen generating equipment.

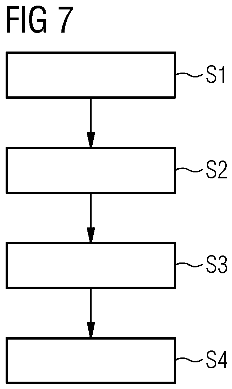

**Figure 7** shows an embodiment of an assembling method according to the third aspect of the present invention.

In a first step S1 a lower deck 5 and an upper deck 4 are provided and transported at the site of the wind turbine 1. In a second step S2, the upper deck 4 is arranged at the wind turbine tower 2 of the wind turbine 1 at a first vertical position and the lower deck 5 is arranged at the wind turbine tower 2 at a second vertical position, the first vertical position being different from the second vertical position. In a third step S3, a support structure 6 comprising the pillars 61 and the walls 62 is provided and is arranged between the upper deck 4 and the lower deck 5 to form the enclosure 7.

Therefore, according to the method of **Figure 7****,** it is possible to assemble a double deck platform directly on the site of the wind turbine in a modular way, without the need of prefabricating and transporting a single deck platform from its production site to the wind turbine site.

Furthermore, in a fourth step S4 it is possible to provide a crane at the upper deck and within the enclosure in order to lift, place and arrange pieces of equipment within the enclosure at the lower deck 5. In such a way, a modular assembly of the equipment of the wind turbine is possible.

## Claims

1. Wind turbine (1), in particular an offshore hydrogen production wind turbine, the wind turbine (1) comprising:
a wind turbine tower (2);
an upper deck (4) arranged at the wind turbine tower (2) at a first vertical position; and
a lower deck (5) arranged at the wind turbine tower (2) at a second vertical position;
wherein the first vertical position is different from the second vertical position.

2. Wind turbine (1) according to claim 1 further comprising
a support structure (6) arranged between the upper deck (4) and the lower deck (5), wherein the support structure (6) is laterally arranged with respect to the wind turbine tower (2) .

3. Wind turbine (1) according to claim 2, wherein the support structure (6) comprises a wall (62) forming at least part of an enclosure (7) between the upper deck (4) and the lower deck (5).

4. Wind turbine (1) according to claim 3, wherein at least one of the wall (62), the upper deck (4) and the lower deck (5) are made of or comprise thermally insulating material.

5. Wind turbine (1) according to claim 3 or 4 further comprising
a dehumidification device (8) configured for controlling a moisture level within the enclosure (7).

6. Wind turbine (1) according to any of claims 3 to 5 further comprising
a temperature controlling system (9) for controlling the temperature within the enclosure (7).

7. Wind turbine (1) according to any of claims 1 to 6 further comprising
a crane arranged at the upper deck (4) or the lower deck (5) in a space between the upper deck (4) and the lower deck (5) .

8. Wind turbine (1) according to any of claims 1 to 7 further comprising
a backup electrical power storage (10) which is arranged at the upper deck (4) and/or the lower deck(5).

9. Wind turbine (1) according to any of claims 1 to 8 further comprising
at least one electrolyzer unit (14) which is arranged at the upper deck (4) and/or the lower deck (5).

10. Wind turbine (1) according to claim 9, wherein the at least one electrolyzer unit (14) is arranged at the lower deck (5).

11. Wind turbine (1) according to claim 9 or 10 further comprising
a gas processor (15) and/or a gas drying and conditioning unit (15) connected to the electrolyzer unit (14) , and/or
a gas outlet terminal (16) configured to be connected to a pipeline for transporting the hydrogen produced by the wind turbine (1).

12. Method for producing hydrogen using a wind turbine (1) according to any of claims 9 to 11.

13. Method for assembling a wind turbine (1), the method comprising:
providing a lower deck (5) and an upper deck (4);
arranging the upper deck (4) at a wind turbine tower (2) of the wind turbine (1) at a first vertical position;
arranging the lower deck (5) at the wind turbine tower (2) at a second vertical position,
wherein the first vertical position is different from the second vertical position.

14. Method according to claim 13 further comprising:
providing a support structure (6);
arranging the support structure (6) between the upper deck (4) and the lower deck (5);
wherein it is preferably provided that the support structure (6) comprises a wall (62), in particular a wall made of or comprising thermally insulating material, forming at least part of an enclosure (7) between the upper deck (4), the lower deck (5) and the wall (62).

15. Method according to claim 14 further comprising:
providing a crane (11);
arranging the crane (11) at the upper deck (4) within the enclosure (7),
wherein the crane (11) is configured for lifting, moving an d/or placing equipment at the lower deck (5).
